# EUROPEAN PATENT APPLICATION

(11) **EP 2 256 394 A1**
(43) Date of publication of application: **01.12.2010**
(21) Application number: 09161532.8
(22) Date of filing: 29.05.2009
(51) Int. Cl.: F16L 37/091, F16L 37/098, B25B 27/10

(54) **Release tool for a push-fit pipe fitting**

(71) Applicant: Wavin B.V., 8011 CW Zwolle (NL)
(72) Inventor: Bristow, Adrian David, Carlton, North Yorkshire DN14 9PH (GB); Brookman, Geert, 9491, AD Zeijen (NL); Sutcliffe, Steven, Wakefield, West Yorkshire WF2 0JZ (GB); Fisher, Raymond, Scawsby, South Yorkshire DN5 8TB (GB); Fardon, Mark, Mansfield, Nottinghamshire NG20 9PP (GB); Hall, Joe Benjamin, Ridgeway, Sheffield S12 3XJ (GB)
(74) Representative: HOFFMANN EITLE

(57) **Abstract**

A release tool (14) is provided for disengaging a pipe from a push-fit pipe fitting. The push-fit pipe fitting comprises a fitting body (1, 2) which defines a bore (3) for receiving a pipe, and gripping means (8, 9) for retaining the pipe within the bore (3). The release tool (14) comprises engaging means (20) for maintaining the release tool (14) in a predetermined release position with respect to the fitting, in which the engaging means (20) are resiliently engaged with the fitting body (1, 2), and an operating portion (18) for disengaging the gripping means (8, 9) from the pipe (5) when the release tool (14) is maintained in said release position.

## Description

### Technical field

The present invention relates to a release tool for disengaging a pipe from a push-fit pipe fitting.

Push-fit pipe fittings are, for example, used in plumbing applications for connecting water pipes. They typically comprise a fitting body in which a bore is provided for receiving an end of the pipe to be connected, and gripping means that grip the pipe end, once inserted (either at its outer side, its inner side or at both sides) so as to prevent the pipe from being withdrawn from the fitting.

In practice, the gripping means typically comprise a grab ring or other toothed structure which has inclined teeth that readily allow the insertion of the pipe end into the bore, but resist withdrawal of the pipe from the bore under axial loading by ultimately biting into the radially outer surface of the pipe end as a withdrawing force is experienced.

In many instances it is desirable that the joint between the pipe and the push-fit pipe fitting is releasable so that the fitting can be disconnected and be reused. To that end, the gripping means need to be disengaged from the pipe. A special release tool is needed for this purpose.

Many known fittings feature a release element for pressing down upon inclined surfaces of the teeth of the gripping means, so as to push them away from their engagement with the surface of the pipe. Also in these cases, a special release tool is needed to press the release element inward.

### Prior art

Several types of release tools for disengaging pipes from push-fit pipe fittings of the type discussed above, for example by acting upon release elements of such push-fit pipe fittings, have been proposed.

On the one hand, there are screw type release tools, wherein the release tool is rotated relatively to the fitting, and wherein this rotation is converted into a predetermined axial displacement of the release element. EP 0 200 666 discloses an example of such a screw-type release tool, wherein cams on the release tool engage a guiding groove in the outer circumferential wall of the associated push-fit pipe fitting. By rotating the release tool, a release collar of the fitting is urged inward so as to disengage a pipe end from the fitting.

EP 1 521 027 A1 discloses a push-fit pipe fitting including a screw-type release cap as a structural element. Similar arrangements are known from GB 2 304 390 A and WO 2007/006542 A1.

On the other hand, trigger type release tools have been proposed, wherein the release tool has the shape of tongs with two parallel arms. Such trigger type release tools are disclosed in, for example, WO 99/43978 and EP 0 542 003. One arm can be slid around the fitting body, the other around the pipe. The tongs can subsequently be squeezed causing one arm to contact the release element and urge it inward. Often the release tool has a provision that the arms can be locked or biased into said squeezed position, thereby freeing the hands of the installer.

Finally, there exist press type release tools, wherein the release tool is hooked around the inserted pipe and slid along the pipe into the fitting so as to disengage the pipe end from the gripping means. The release tool according to the present invention is of the press type. Prior art examples for such press type release tools are known from GB 2 226 861 and WO 99/43978, where the fittings do not include any release elements and the release tools act directly upon the respective gripping means. In these prior art examples, the operator is required to use one of his hands to operate the release tool, i.e. to push the release tool into the fitting and hold it in position, and to use his other hand to withdraw the pipe from the fitting. This may be cumbersome, in particular if the available space is cramped, which often is the case.

### Summary of the invention

The object underlying the present invention is to provide a release tool for disengaging a pipe from a push-fit pipe fitting in which the handling of the release tool is facilitated.

The invention also aims at providing a push-fit pipe fitting system including a push-fit pipe fitting as well as the said release tool.

The object is solved by means of a release tool for disengaging a pipe from a push-fit pipe fitting as claimed in claim 1. The push-fit pipe fitting comprises a fitting body which defines a bore for receiving a pipe, and gripping means for retaining the pipe within the bore. In accordance with the invention, the release tool comprises engaging means for maintaining the release tool in a predetermined release position with respect to the fitting, in which the engaging means are resiliently engaged with the fitting body, and an operating portion for disengaging the gripping means from the pipe when the release tool is maintained in said release position.

Thus, the release tool of the invention is so dimensioned that once the release tool is brought into the release position with respect to the fitting body, the operating portion of the release tool causes disengagement of the gripping means from the pipe. At the same time, due to the engaging means which resiliently engage the fitting body in the release position, the release tool is maintained in the release position, without help of the installer. The installer will thus have both hands free.

The engaging means define the predetermined and fixed release position of the release tool relative to the fitting. Once in the release position, the release tool cannot move relative to the fitting to a larger extent, at least not in the axial or longitudinal direction of the release tool and fitting. The release position is a position in which the relative positional relationship of the release tool with respect to the fitting is substantially fixed in the axial direction.

Consequently, the force used to release the gripping means is also predetermined and fixed, and it is largely independent from the strength and skill of the installer. Namely, if an excessive force is used, the gripping means can be damaged. If too little a force is used, this could lead to scores or scratches generated along the surface of the inserted length of the pipe by the gripping means which are still in some engagement with the pipe. If the pipe is re-used, these scores and scratches can cause leakage, especially at low pressures.

In other words, the engaging means of the release tool, which is responsible for the engagement between the release tool and the fitting, is designed and dimensioned such that the gripping means will be acted upon in the correct way, i.e. with uniform pressure and over the desired distance. The user knows that the disengagement has taken place and that it is safe to remove the pipe simply due to the fact that the release tool has assumed the only possible predetermined release position with respect to the fitting. Thus, it is not necessary to provide further indicators, such as registration marks, on the release tool and/or outer surface of the body portion.

Furthermore, the gripping means is always loaded consistently and evenly and cannot become skewed within the fitting.

In the release position of the release tool relative to the fitting, the engaging means are resiliently engaged with the fitting body. Compared with the case in which the release position is attained by, for example, screwing the release tool onto the fitting, the release tool of the present invention may be quickly and easily brought into the release position relative to the fitting. At the same time, the resilient engagement between the engaging means and the fitting body makes sure that the release tool is reliably maintained in said release position. On the other hand, if desired, the release tool can easily be disengaged from the fitting by cancelling the resilient engagement.

Finally, another advantage of the release tool of the present invention is that it may be of very simple, one-piece configuration and may be so small that it hardly requires additional space with respect to the fitting itself. If so, it can easily be operated in cramped spaces. The release tool may also be manufactured at low cost (e.g. injection moulded) .

Preferred features of the release tool of the invention are set out in dependent claims 2 to 11.

First of all, the engaging means may be adapted to perform a snapping action relative to a portion of the fitting body so as to maintain the release tool in the release position. Said portion of the fitting body may be any formation matching with the engaging means. For example, a lower edge of the fitting body could be used for this purpose.

In a preferred embodiment, the release position of the release tool relative to the fitting is attainable by a non-rotational displacement of the release tool with respect to the fitting in an axial direction thereof. In order to bring the release tool into the release position with respect to the fitting, the user may then merely slide the release tool onto the fitting until it assumes the release position, in which engaging means resiliently engage the fitting body. Other than in screw-type release tools, it is not necessary to provide means for guiding the release tool in its rotational movement of the release tool relative to the fitting.

The release tool is preferably adapted to at least partly surround the fitting body in the said release position. There may, however, be cases in which the release tool does not surround the fitting body, while the engaging means still resiliently engage the fitting body in the release position.

As regards the structure of the release tool, in a preferred embodiment, the release tool has a generally cylindrical shape and a longitudinal slot which extends along the entire length of the release tool so as to enable the release tool to be positioned around the pipe. The release tool can then easily be positioned so as to accommodate the pipe and then slid onto the fitting so as to assume the release position.

Further preferably, the release tool comprises a ring-shaped main part which has an inner diameter substantially the same as the outer diameter of the pipe, and at least one resilient leg which extends from the ring-shaped main part along a longitudinal direction of the release tool. In a preferred embodiment, there are two such resilient legs which are divided along the longitudinal direction of the release tool. Irrespective of how many legs are provided, the engaging means, which define the release position of the release tool relative to the fitting, may be provided on the resilient leg(s), preferably in the form of a ridge / ridges extending radially inwardly from the leg(s).

In a preferred embodiment, the engaging means - e.g. the inwardly extending ridges - are provided at or near the free end(s) of the leg or legs opposite the ring-shaped main part of the release tool. The relative position of the operating portion and the engaging means, e.g. the inwardly extending ridge, of the release tool is such that the operating portion of the release tool disengages the pipe from the gripping means in the release position.

In other embodiments the engaging means for engaging the fitting may be provided about halfway on the leg(s) of the release tool.

As to the operating portion of the release tool, this may be provided on the ring-shaped main part of the release tool, preferably in the form of at least one part-annular protrusion which extends from the ring-shaped main part inwardly along the longitudinal direction of the release tool.

The said operating portion of the release tool may comprise a bearing surface for acting directly upon a release element of the fitting for disengaging the gripping means from the pipe.

Finally, for the sake of convenient handling, the release tool may also comprises a handling portion, preferably in the form of a part-annular flange provided on the outer circumferential surface of the release tool, allowing an installer to push the release tool over the fitting body.

The invention also provides a push-fit pipe fitting system (claim 12) including: a push-fit pipe fitting comprising a fitting body which defines a bore for receiving a pipe, and gripping means for retaining the pipe within the bore; and a release tool as set out above and in claims 1 to 11 for disengaging the fitting from the pipe.

Preferred features of this aspect of the invention are set out in Claims 13 to 15.

Firstly, in a preferred embodiment, the push-fit pipe fitting further comprises a release element for disengaging the gripping means from the pipe. The operating portion is arranged and constructed so as to act upon said release element when the release tool is maintained in the release position relative to the fitting.

Thus, the release tool of the invention is so dimensioned that once the release tool is brought into the release position with respect to the fitting body, the operating portion of the release tool acts upon the release element of the fitting, which in turn causes disengagement of the gripping means from the pipe. At the same time, due to the engaging means, the release tool is maintained in the release position, without help of the installer. The installer will thus have both hands free.

In other words, the engaging means of the release tool, which is responsible for the engagement between the release tool and the fitting, is designed and dimensioned such that the release element will be urged inward in the correct way, i.e. with uniform pressure and over the desired distance. Consequently, each individual release tool is dedicated to a particular type of push-fit fitting, and together with the mating fitting, malfunctions of the release tool are practically impossible. The user knows that the disengagement has taken place and that it is safe to remove the pipe simply due to the fact that the release tool has assumed the only possible predetermined release position. Thus, it is not necessary to provide further indicators, such as registration marks, on the release tool and/or outer surface of the body portion

Furthermore, the release element is always loaded consistently and evenly, so that the release element and/or gripping means cannot become skewed within the fitting.

The release element may include a release collar which has a generally annular structure and is arranged in the bore of the fitting so as to surround the pipe. In this case, the force applied to the release collar may be favourably and evenly transferred to the gripping means.

At least one of the release mechanism and the fitting body preferably comprises means for preventing the release element from projecting outside the bore. Namely, if the release element does not project beyond the mouth of the fitting, accidental release becomes impossible. Preferably, the release element lies somewhat countersunk within the fitting body (or at most flush therewith) so as to prevent it from being pushed inward inadvertently.

Preferably, the release element is supported within the fitting so as to be movable in the axial or longitudinal direction of the fitting, so that it may act upon the gripping means by being displaced by a certain amount in the said axial direction.

Finally, the gripping means may be provided in the form of a grab ring having teeth for engaging the outer surface of the pipe inserted into the bore. In other embodiments, the gripping means could be based on wedge action, wherein an annular part becomes wedged between the pipe and the fitting as the pipe is subjected to a withdrawing force, thereby preventing further withdrawal of the pipe.

### Brief description of the drawings

Embodiments of the invention will now be described by way of example and with reference to the accompanying drawings in which:
Figure 1 is a view of a push-fit pipe fitting system in accordance with the invention, including a push-fit pipe fitting and a release tool;
Figure 2 is a perspective view of the release tool of the system shown in Figure 1;
Figure 3 is a sectional view of the release tool of Figure 2; and
Figure 4 illustrates the manner of operating the release tool of the present invention in order to disengage a pipe end from a push-fit pipe fitting.

### Detailed description of a preferred embodiment of the invention

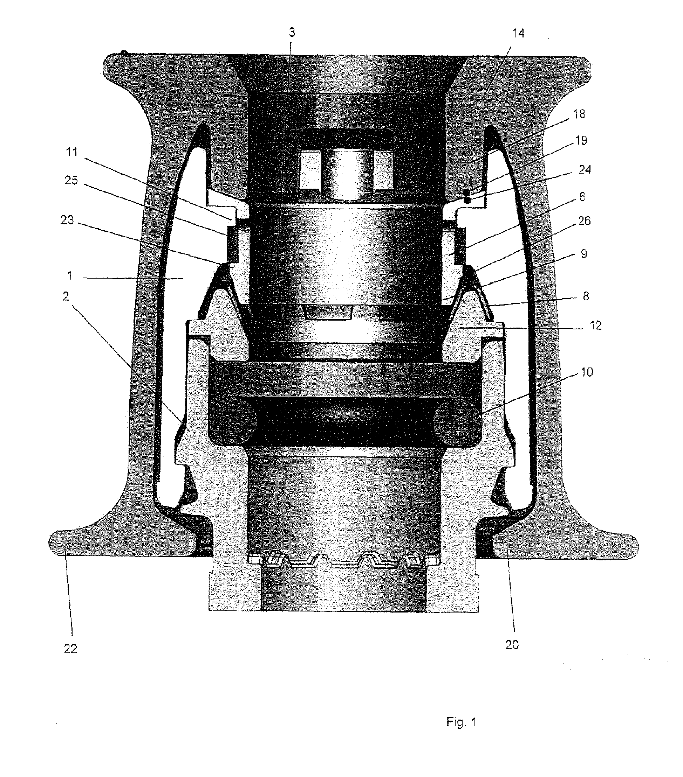

Figure 1 shows a preferred embodiment of a push-fit pipe fitting system in accordance with the invention, including a push-fit pipe fitting and a release tool, both of which will be described in detail in the following.

Turning first to the push-fit pipe fitting (which will also be simply referred to as the "fitting" in the following), the fitting comprises a fitting body with a bore 3 for receiving a pipe to be connected (not shown). In this preferred embodiment, the fitting body mainly consists of two parts, namely an upper part 1 and a lower part 2. The fitting body parts 1, 2 can be formed from a wide variety of materials, including various plastics (such as polybutylene) and brass. The fitting further comprises gripping means in the form of a grab ring 8, and a seal 10, both of which are annular and coaxially accommodated within the bore 3. Reference numeral 12 designates another annular element which is also part of the fitting and functions as a grab ring support.

The seal 10 is adapted to accommodate the pipe and to seal between its radially outer surface and a radially inner surface of the bore 3 when the pipe is fully received within the bore 3.

The grab ring 8 has inclined teeth 9 that are adapted to flex as the pipe is inserted into the bore 3, thereby permitting its insertion. The inclination of the teeth 9 is, however, such as to bite into the pipe and resist removal thereof from the bore 3, particularly during axial loading of the pipe as experienced when the system is pressurized.

To release the pipe from the fitting and therefore render the fitting reusable, the fitting includes a release collar 6 which is supported within the fitting body so as to be movable to a certain extent in the axial or longitudinal direction of the fitting. The release collar 6 can be operated to disengage the teeth 9 of the grab ring 8 from the radially outer surface of the pipe. The release collar 6 is provided in a mouth region of the bore 3 and has a generally annular structure.

At one axial end, the release collar 6 is provided with a bearing surface 24 that faces axially outwards relative to the bore 3 and is arranged so as to be acted upon by a mating bearing surface 19 of a release tool 14 to be described further below. At its opposite axial end, the release collar 6 is provided with a frustoconical camming surface 26 arranged so as to act upon the said teeth 9 of the grab ring 8 to disengage the teeth 9 from the radially outer surface of the pipe.

The radially outer surface of the release collar 6 is provided with an annular rebate 25 defining an abutment shoulder 23 that also faces in the axially outward direction relative to the bore 3. On the upper part 1 of the fitting body, a corresponding, inwardly facing abutment shoulder 11 is formed. The abutment shoulders 23, 11 cooperate so as to prevent the release collar 6 from projecting outside the bore 3 and, therefore, so as to prevent it from being pushed inward inadvertently.

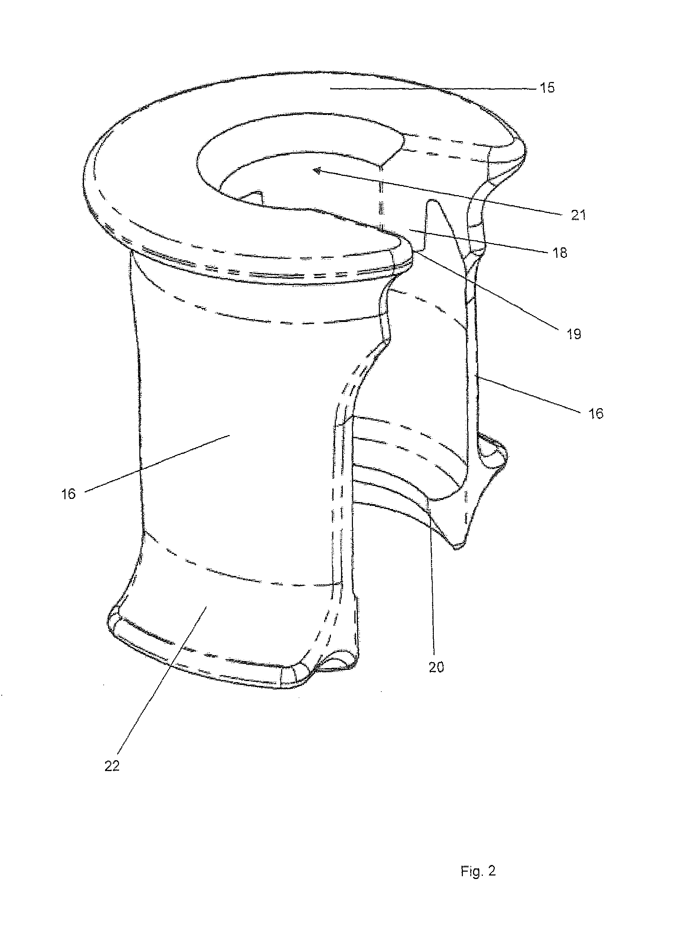

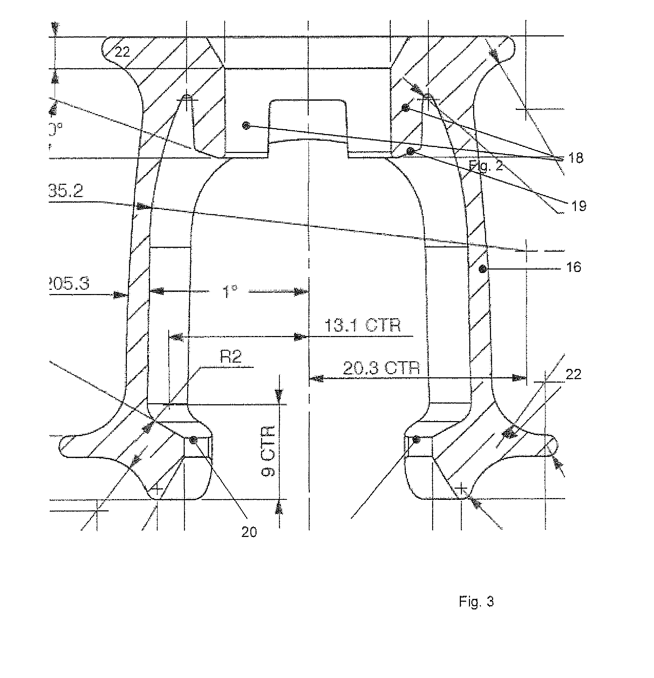

A special release tool 14 is provided for acting upon the said release collar 6 of the push-fit pipe fitting, in order to disengage the teeth 9 of the grab ring 8 from the radially outer surface of the pipe and to release the pipe from the fitting. Figures 2 and 3 show said release tool 14 separated from the fitting. Note that, while the shape of the release tool 14 shown in Figures 2 and 3 may slightly differ from the shape of the release tool 14 illustrated in Figure 1, this does not result in any substantial differences regarding the function and operation of the release tool.

The release tool 14 has a generally part-cylindrical shape. More specifically, the release tool 14 comprises a ring-shaped main part 15 which has an inner diameter substantially the same as the outer diameter of the pipe and has the form of a ring except for a slot 21 for receiving the pipe. The release tool 14 further includes two resilient legs 16 which extend from the ring-shaped main part 15 in an axial direction. The legs 16 are divided along the longitudinal axis of the release tool so that their free ends may move a limited distance apart.

The release tool 14 is further provided with an operating portion for acting upon the release collar 6 of the fitting. In the illustrated embodiment, the operating portion has the form of two short part-annular protrusions 18 which extend from the annular main part 15 of the release tool 14 inwardly into the release tool body along the axial direction of the release tool.

In accordance with the invention, the release tool 14 is so arranged and constructed so as to be brought into a predetermined and fixed release position with respect to the fitting, in which release position the pipe can be withdrawn from the bore 3. In Figure 1, the release tool 14 has assumed said release position relative to the fitting. It becomes clear from the Figure that in the release position, the operating portion 18 of the release tool 14 acts upon the release collar 6 of the fitting. In particular, the operating portion 18 of the release tool comprises the said bearing surface 19 for acting directly upon the axially facing bearing surface 24 of the release collar 6 of the fitting so as to move the release collar 6 by a predetermined amount in the axial direction. This axial movement of the release collar 6 in turn causes disengagement of the teeth 9 of the grab ring 8 from the pipe.

The release tool 14 comprises engaging means for maintaining the release tool 14 in the release position relative to the fitting. In the present embodiment, the engaging means are provided in the form of radially inwardly extending ridges 20 at the free ends of the legs 16. When the release tool 14 is mounted to the fitting by axially sliding it over the fitting body in a manner to be discussed in more detail further below, these ridges 20 snap around the lower edge of the fitting body 1, 2 as shown in Figure 1 so as to maintain the release tool 14 in the predetermined release position. When the inwardly extending ridges 20 have snapped around the lower edge of the fitting body 1, 2 and the release tool 14 has assumed its release position relative to the fitting, the operating portion 18 of the release tool has moved into the fitting by a predetermined amount in the axial direction and acts upon the release collar 6.

Due to the engaging means 20, the release tool 14 is maintained in the release position without help of the installer and does not move relative to the fitting, at least not in the axial direction. Rotation of the release tool about the longitudinal axis may remain possible, though.

As explained above, the inwardly extending ridges 20 which snap around the fitting body 1, 2 define a predetermined and fixed release position of the release tool 14 relative to the fitting. This also means that in order to assume the release position, the operating portion 18 of the release tool 14 moves a predetermined amount into the fitting in the axial direction so as to act upon the release collar 6 thereof. Consequently, the force used to release the teeth 9 of the grab ring 8 is also a predetermined and fixed one and is largely independent from the strength and skill of the installer.

Reference numeral 22 designates a handling portion provided in the form of a flange on the outside of the free ends of the resilient legs 16, allowing an installer to push the release tool 14 downward, over the fitting body. To facilitate this operation, a chamfer or radius may be provided at the free edge(s) of the release tool 14. For example, in the embodiment depicted in Figure 1, the free ends of the resilient legs 16 are provided with such a radius at their radially inner side.

It is to be noted that the present release tool 14 is adapted to the dimensions of a particular type of push-fit fitting, resulting in the release collar being be pushed inward over a predetermined axial distance, thereby preventing the grab ring from being acted upon incorrectly. If pushed inward too far, the teeth of the grab ring may be become permanently deformed, thereby preventing the fitting form being reused. If pushed inward not far enough, the pipe may be difficult to remove and/or become severely scratched during removal.

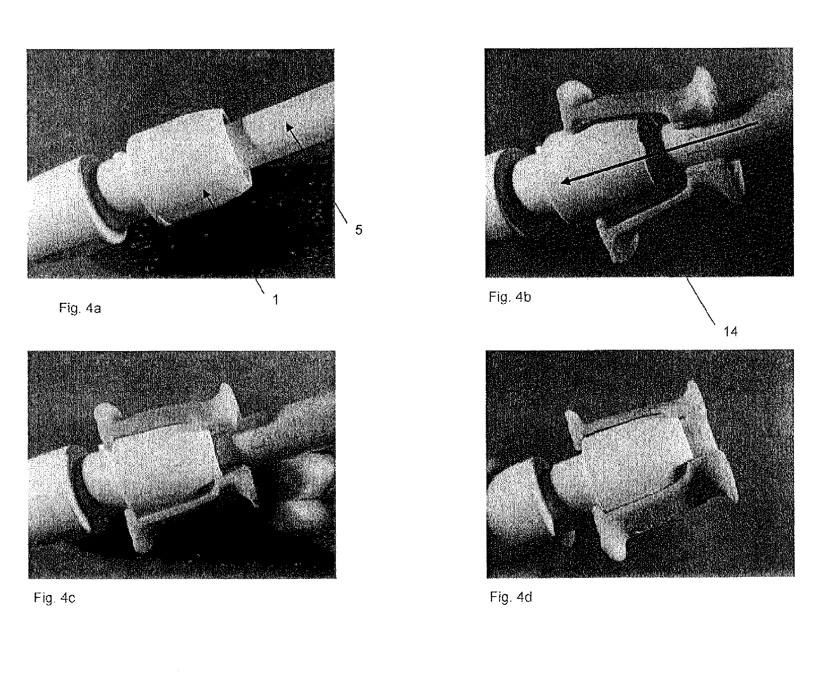

The mounting of the release tool 14 upon the push-fit pipe fitting in order to release the pipe from engagement with the fitting will now be described with reference to Figure 4.

Figure 4 starts from a situation (Fig. 4a) in which a pipe 5 has been inserted into the bore 3 of the push-fit pipe fitting of Figure 1 until it can proceed no further. In this state, the teeth 9 engage the radially outer surface of the pipe 5, and the sealing ring 10 effects a seal between the pipe 5 and the bore 3.

In order to disengage the pipe 5 from the fitting, a release tool 14 as described above with reference to Figures 1 to 3 is used.

Firstly, the release tool 14 is positioned so as to surround the pipe 5 by sliding the release tool 14 sideways with its slot 21 around the pipe 5. Subsequently, the release tool 14 is slid along the pipe 5, in axial direction towards the fitting.

The release tool 14 is then further slid over the fitting body 1, 2 in the axial direction (the direction indicated with an arrow in Figure 4b). The outer surface of the fitting body 1, 2 will thereby urge the resilient legs 16 of the release tool 14 slightly radially outward so that they are forced apart from each other.

When the legs 16 have reached the lower edge of the fitting body 1, 2, the legs 16 will resiliently snap back from said forced apart position around said lower edge so that the release tool 14 assumes the release position (cf. Figure 4c). In said release position, the engaging ridges 20 at the free ends of the resilient legs 16 are resiliently engaged with the fitting body 1, 2.

In said release position, the operating portion 18 of the release tool 14 has entered the fitting body 1, 2 over a predetermined axial distance and has pushed the release collar 6 of the fitting axially inward into the fitting by a predetermined amount. The said camming surface 26 of the release collar 6 has acted upon the radially inner surface of the teeth 9 of the grab ring 8, thereby dilating the grab ring 8 and pushing the teeth 9 radially away from their engagement with the radially outer surface of the pipe 5.

Once this disengagement of the teeth 9 from the pipe has been achieved, the pipe 5 can be safely withdrawn from the fitting (cf. Figure 4d). At this point, the relative positions of the release tool 14 and fitting are as shown in Figure 1. Once in the release position, i.e. once the release tool 14 has snapped around the fitting and operated the release collar 6, the release tool 14 cannot be axially moved to a larger extent, i.e. the release position is a position in which the relative positional relationship of the release tool 14 with respect to the fitting is substantially fixed in the axial direction.

For rendering the fitting reusable, the release tool 14 can then be withdrawn from the bore 3, thereby relaxing the dilation of the teeth 9 of the grab ring 8.

By the above described operation, a controlled, predetermined axial displacement of the release collar 6 is achieved as the release tool 14 is snapped about the fitting body 1, 2 into the release position, which is defined by the engagement of the engaging ridges 20 with the lower edge of the fitting body 1, 2. This means that a consistent force is applied to the release collar 6 irrespective of the skill and strength of the user.

Furthermore the release tool 14 ensures that an axial pressure is applied around substantially the entire circumference of the grab ring 8, avoiding skewing.

The user knows that the disengagement has taken place and that it is safe to remove the pipe 5 simply due to the fact that the release tool 14 has snapped about the fitting and assumed the only possible predetermined release position. Thus, it is not necessary to provide further indicators, such as registration marks, on the release tool 14 and/or the outer surface of the fitting body.

The above description is given by way of example only and is not intended to limit the scope of the invention, that being determined by the appended claims. Many variations and modifications will suggest themselves to those versed in the art upon making reference to the present description, for example in the following respects.

First of all, in the preferred embodiment described above, the push-fit pipe fitting includes the release collar 6, and the release tool 14 is designed so as to act upon the release collar 6 which, in turn, acts upon the grab ring 8. The present invention does, however, also encompass release tools and push-fit pipe fittings in which the release tool is designed so as to act directly upon the gripping means, without there being an additional release element provided there between. In this case, for example, the operating portion of the release tool may be shaped so as to dilate the grab ring teeth in the release position of the release tool relative to the fitting.

The fitting as such can have an almost infinite variety of overall shapes and configurations, both in terms of its function and its appearance. For example, the fitting could be a simple coupling (as shown in Figure 4), for joining two lengths of pipe together; a more complex joint, such as an elbow; or something more complex, such as a T-junction, a manifold or a valve. Some of these fittings will include other socket-defining body portions and these need not necessarily have a similar structure to the illustrated fitting body.

The illustrated push-fit pipe fitting comprises a fitting body which mainly consists of two parts, namely an upper part 1 and a lower part 2. The fitting body could, however, as well be formed as a single integral piece or be made from more than two components that are combined together in some other way.

In the illustrated embodiment, the gripping means are provided in the form of a teethed grab ring 8. In other embodiments, the gripping means could be based on wedge action, wherein an annular part becomes wedged between the pipe and the fitting as the pipe is subjected to a withdrawing force, thereby preventing further withdrawal of the pipe.

The above embodiment makes use of a pair of part-annular protrusions 18 which form the operating means and a pair of legs 16 each carrying an inwardly extending ridge 20 constituting the engaging means. It is, however, equally possible to have a different number of each of these components. For example, in some cases it may be preferable to have three or four protrusions provided on the release tool. It is also not necessary to have the same number of operating protrusions 18 as there are legs 16 and ridges 20.

In the illustrated embodiment, the bearing surfaces 19, 24 are slanted; they may, however, have different structure as long as they are designed to be in contact with each other in the release position of the release tool.

In the above referenced embodiment, the engaging means 20 engage the fitting body at its lower edge. In an alternative embodiment, the engaging means may engage the fitting body at a different location.

While in the above embodiment, the release collar and the fitting body 15 include respective abutment shoulders 23, 11 which cooperate so as to prevent the release collar 6 from projecting outside the bore 3, the same effect could be achieved by alternative means provided on at least one of the release element and the fitting body.

Finally, the specific shape and configuration of the seal 10 are also not relevant to the invention and a wide variety of alternative seals could be used in its place.

### List of reference numerals

fitting body (1, 2)
bore (3)
pipe (5)
release element / collar (6)
grab ring (8)
grab ring teeth (9)
sealing means (10)
fitting body abutment shoulder (11)
grab ring support (12)

release tool (14)
ring-shaped main part (15)
resilient legs (16)
operating means / protrusions (18)
bearing surface (19)
engaging means / ridges (20)
longitudinal slot (21)
handling portion (22)

release collar abutment shoulder (23)
release collar bearing surface (24)
release collar annular rebate (25)
release collar frustoconical camming surface (26)

## Claims

1. A release tool (14) for disengaging a pipe (5) from a push-fit pipe fitting,
wherein the push-fit pipe fitting comprises a fitting body (1, 2) which defines a bore (3) for receiving the pipe (5), and gripping means (8, 9) for retaining the pipe within the bore (3),
wherein the release tool (14) comprises:
- engaging means (20) for maintaining the release tool (14) in a predetermined release position with respect to the fitting, in which the engaging means (20) are resiliently engaged with the fitting body (1, 2), and
- an operating portion (18) for disengaging the gripping means (8, 9) from the pipe when the release tool (14) is maintained in said release position.

2. A release tool (14) according to claim 1, in which the engaging means (20) are adapted to perform a snapping action relative to a portion of the fitting body (1, 2) so as to maintain the release tool in the release position.

3. Release tool according to any one of claims 1 and 2, in which the release position of the release tool (14) relative to the fitting is attainable by a non-rotational displacement of the release tool (14) with respect to the fitting in an axial direction thereof.

4. A release tool according to any one of the preceding claims, in which the release tool (14) is adapted to at least partly surround the fitting body (1, 2) in the said release position.

5. A release tool according to any one of the preceding claims, in which the release tool (14) has a generally cylindrical shape and a longitudinal slot (21) which extends along the entire length of the release tool (14) so as to enable the release tool (14) to be positioned around the pipe (5).

6. A release tool according to any one of the preceding claims, in which the release tool (14) comprises a ring-shaped main part (15) which has an inner diameter substantially the same as the outer diameter of the pipe (5), and at least one resilient leg (16) which extends from the ring-shaped main part (15) along a longitudinal direction of the release tool (14).

7. A release tool according to claim 6, wherein the engaging means (20) are provided on the resilient leg (16), preferably in the form of a ridge (20) extending radially inwardly from the leg (16).

8. A release tool according to claim 6 or 7, in which the engaging means (20) are provided at or near the free end of the leg (16) opposite the ring-shaped main part (15).

9. A release tool according to any one of claims 6 to 8, in which the operating portion (18) is provided on the ring-shaped main part (15), preferably in the form of at least one part-annular protrusion which extends from the ring-shaped main part (15) inwardly along the longitudinal direction of the release tool (14).

10. A release tool according to any preceding claim, wherein the said operating portion (18) comprises a bearing surface for acting directly upon a release element (6) of the fitting for disengaging the gripping means (8, 9) from the pipe (5).

11. A release tool according to any preceding claim, wherein the release tool (14) comprises a handling portion (22), preferably in the form of a part--annular flange provided on the outer circumferential surface of the release tool (14), allowing an installer to push the release tool (14) over the fitting body (1, 2).

12. A push-fit pipe fitting system including:
a push-fit pipe fitting comprising a fitting body (1, 2) which defines a bore (3) for receiving a pipe, and gripping means (8, 9) for retaining the pipe within the bore (3), and
a release tool (14) as claimed in any one of claims 1 to 11 for disengaging the fitting from the pipe.

13. A push-fit pipe fitting system according to claim 12,
wherein the push-fit pipe fitting further comprises a release element (6) for disengaging the gripping means (8, 9) from the pipe, and wherein the operating portion (18) is arranged and constructed so as to act upon said release element (6) when the release tool (14) is maintained in the release position relative to the fitting.

14. A push-fit pipe fitting system according to claim 13, in which the release element includes a release collar (6) which has a generally annular structure and is arranged in the bore (3) of the fitting so as to surround the pipe (5).

15. A push-fit pipe fitting system as claimed in any one of claims 12 to 14, wherein the gripping means are provided in the form of a grab ring (8) having teeth (9) for engaging the outer surface of the pipe inserted into the bore (3).
